Europäisches Patentamt

European Patent Office

Office européen des brevets

(11) Publication number: **0 114 096**
A1

# (12) EUROPEAN PATENT APPLICATION

(21) Application number: 84300106.6

(22) Date of filing: 09.01.84

(51) Int. Cl.³: **B 25 J 15/00**

(30) Priority: 13.01.83 US 457600

(43) Date of publication of application: 25.07.84
Bulletin 84/30

(84) Designated Contracting States: **DE GB IT NL SE**

(71) Applicant: **Western Electric Company, Incorporated,
222 Broadway, New York, NY 10038 (US)**

(72) Inventor: **Hoffman, Brian David, 208 Windsor Court,
Somerville New Jersey 08876 (US)**

(74) Representative: **Lawrence, Brian Richard et al, Western
Electric Company Limited 5, Mornington Road, Woodford
Green Essex IG8 OTU (GB)**

(54) **Robotic arm.**

(57) An improved robotic arm (10) is disclosed comprising a
supporting base (12) coupled to one end of the arm and a wrist
gripping arrangemment (11) rotatably coupled to the other end
of the arm. The gripping arrangement (11) comprises a plurality
of independently controllable, angularly displaced, pairs of
gripping fingers (37, 42). In one embodiment, a first pair of
gripping fingers (37) is positioned at 180° from a second pair
of gripping fingers (42). The first and second pair of fingers (37,
42) are independently actuated in a direction perpendicular to
the wrist-rotation axis of the arm (10).

B.D. HOFFMAN 1

## ROBOTIC ARM

### Technical Field

The present invention relates to robotic arms.

### Background of the Invention

Over the past few years, industrial manufacturing production lines have included an increasing number of automated processes using programmable manipulators or robots. These robots simulate the hand, arm, and wrist movements of a machine operator with consistent accuracy and without any risk to operator personal injury or fatigue. A variety of such robots have been proposed and are commercially available in various sizes, specifications and performances.

One of such commercially available robotic arm is the SEIKO Model 700 precision robot manufactured by Seiko Instruments Inc. of Japan. Such a known arm is capable of performing four basic motions usually required in a manufacturing or part assembly process. The foregoing motions include a vertical displacement (up/down), a horizontal movement (extension/retraction), a plane-rotation (arm swinging through an arc in a horizontal plane), and a grip rotation (rotation of the two fingers about the axis of the wrist). Although this known arm operates satisfactorily for its intended purpose, it is usually dedicated to a single article or piecepart at a time. In essence, while a particular manufacturing step is being implemented on such article or piecepart, the arm is idle and waiting for the end of the manufacturing step.

Therefore, there exists a need for an improved robotic arm capable of continuous operation with a substantially limited idle or waiting time sequence in its operating cycle.

0114096

- 2 -

## Summary of the Invention

The foregoing need is met in an embodiment of the present invention wherein a gripping mechanism for a robotic arm including a wrist portion capable of rotating about a wrist axis comprises a plurality of gripping means coupled to the wrist portion of the arm and extending away from the wrist rotation axis; and means for independently actuating each one of the plurality of gripping means.

In one illustrative embodiment of the present invention the gripping mechanism comprises an elongated body attached to the wrist portion and positioned in a substantially parallel direction to the wrist rotation axis; first gripping means coupled to the elongated body and extending away therefrom in a direction substantially perpendicular to the wrist rotation axis; second gripping means coupled to the elongated body and extending away therefrom in a direction substantially perpendicular to the wrist rotation axis, the second gripping means being angularly displaced from the first gripping means; and means for independently actuating the first and the second gripping means in a direction perpendicular to the wrist rotation axis.

## Brief Description of the Drawings

FIG. 1 is a perspective view of an improved robotic arm in accordance with an illustrative embodiment of the present invention;

FIG. 2 is a detailed side view of the wrist portion and the gripping mechanism of the improved robotic arm of FIG. 1;

FIG. 3 is an end view of the gripping mechanism of the robotic arm of FIG. 1; and

FIG. 4 is a schematic perspective view of a work station utilizing the improved robotic arm of FIG. 1.

## Detailed Description

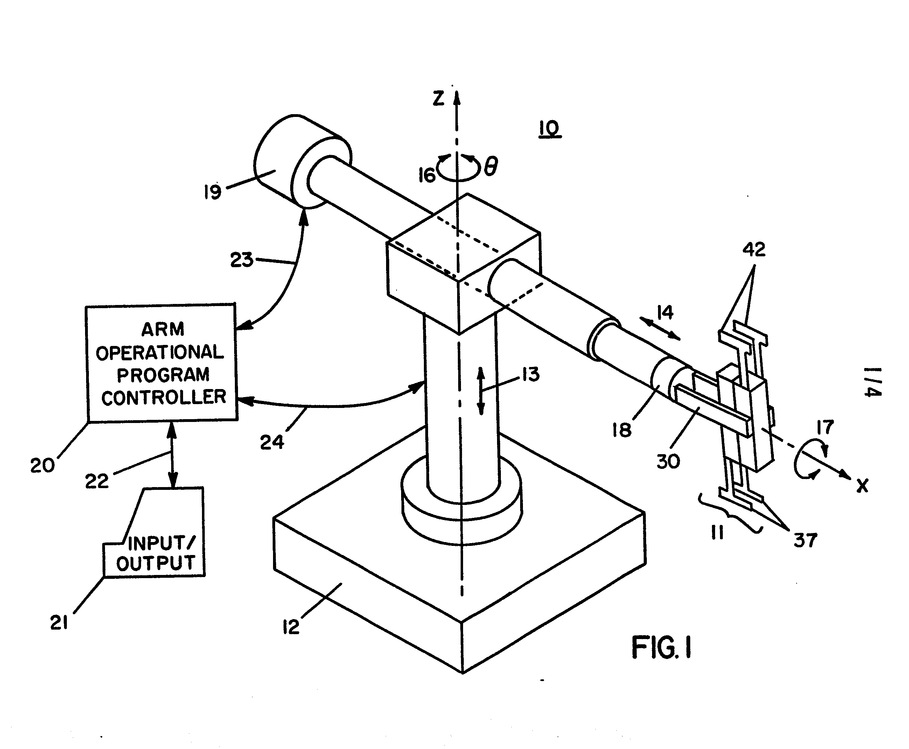

Shown in FIG. 1 is an improved robotic arm 10 having a gripping mechanism 11 in accordance with an illustrative embodiment of the invention. The arm 10, which is mounted on a supporting base 12, has several degrees of motion. A vertical motion, illustrated by bidirectional arrow 13, enables the raising and lowering of the arm 10 along a Z-axis direction. The arm 10 is also capable of extending and retracting along a longitudinal X-axis direction as illustrated by bidirectional arrow 14. Plane-rotation of the arm 10 around its Z-axis, as illustrated by bidirectional arrow 16, achieves a swinging of the arm 10 through a predetermined arc $\theta$ in a plane parallel to the X-axis. A rotation 17 of the gripping mechanism 11 around wrist 18 of the arm 10 is the fourth motion of the arm. The foregoing vertical motion 13, longitudinal motion 14, plane-rotation 16 and wrist-rotation 17 of the arm 10 are implemented by a plurality of actuators, such as 19, capable of actuating individually dedicated control elements. An arm operational program controller 20, coupled to an input/output device 21 via a bidirectional bus link 22, and coupled to the arm 10 by means of bidirectional links 23 and 24, selectively energizes and deenergizes predetermined actuators of the arm 10 in accordance with a sequence of desired arm motions. The program controller 20, the input/output device 21, and the various actuators associated with the arm 10 are of known commercially available types.

It will be appreciated that the present invention is not limited to any particular type of robotic arm or any particular combination of different directions of movement. Furthermore, any type of actuating devices used to achieve the movement of the arm, as well as any particular mechanical or positional arrangement of the arm are well within the spirit and scope of the present invention. For example, although FIG. 1 shows a robotic arm wherein the wrist-rotation axis is coincident with the extension/retraction longitudinal X-axis direction, the gripping mechanism 11 in accordance with the present invention is also applicable to robotic arms having other relative directional movements between their respective directional axes.

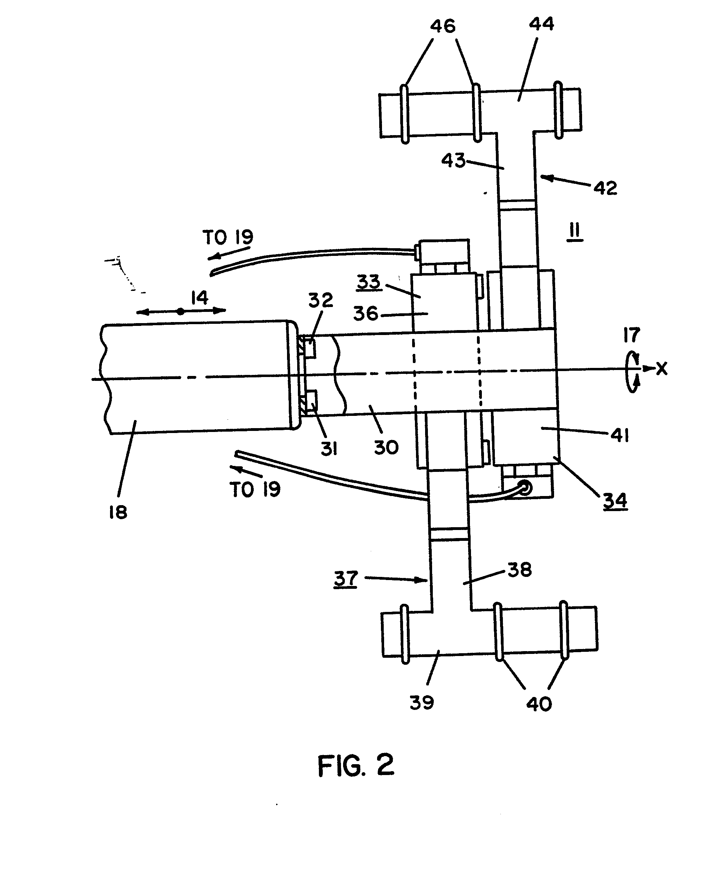

Shown in FIG. 2 is a side view of the gripping mechanism 11 of the robotic arm 10 of FIG. 1. The gripping mechanism 11 comprises an elongated body 30 attached to the wrist 18 of the arm by means of fastening screws 31 and 32. As shown, the elongated body 30 is positioned along a direction substantially parallel to the X-axis direction. In the illustrative embodiment shown, the X-axis is the axis of rotation (as illustrated by 17) of the wrist 18 as well as the longitudinal direction of extension/retraction (as illustrated by 14) of the arm 10. The gripping mechanism 11 further comprises a first and a second gripping arrangement 33 and 34 coupled to the elongated body 30 and extending generally in a direction substantially perpendicular to the X-axis.

The first gripping arrangement 33 comprises a gripping actuating device 36 attached to the elongated body 30, and a pair of gripping fingers 37 attached to the actuating device 36. The gripping actuating device 36 may be of a well known commercially available type, such as the Seiko Model G200 gripping device. Each gripping finger 37 includes a coupling portion 38 attached at one of its ends to the actuating device 36, and a gripping portion 39 located at the other end of the coupling portion 38. In order to enhance the gripping function of the gripping portion 39, a plurality of compliant deformable rings 40, e.g. O-rings, are located around the gripping portion 39. The operation of first gripping arrangement 33 is controlled by the actuator 19 (not shown) in accordance with well known techniques.

Similarly, the second gripping arrangement 34 comprises a gripping actuating device 41, and a pair of gripping fingers 42 attached to the actuating device 41. Each gripping finger 42 includes a coupling portion 43 attached at one of its ends to the actuating device 41, and a gripping portion 44 located at the other end of the coupling portion 43. As mentioned above in connection with gripping fingers 37, a plurality of compliant deformable rings 46, e.g. O-rings, are located around the gripping portion 44 to enhance its gripping function.

In the illustrative embodiment of FIG. 2, the pairs of gripping fingers 37 and 42 are on opposite sides with respect to the elongated body 30. In essence, the gripping fingers 37 are angularly displaced from the gripping fingers 42 by about 180°. However, a gripping mechanism 11 having more than two gripping arrangements angularly displaced from each other is well within the spirit and scope of the present invention. The elongated body 30 attached to the wrist portion 18 via screws 31 and 32 may be an L-shaped member. In a preferred embodiment of the invention, the elongated body 30 comprises a U-shaped member having its base attached to the wrist portion 18, and the two gripping arrangements 33 and 34 positioned and attached between its two parallel side portions.

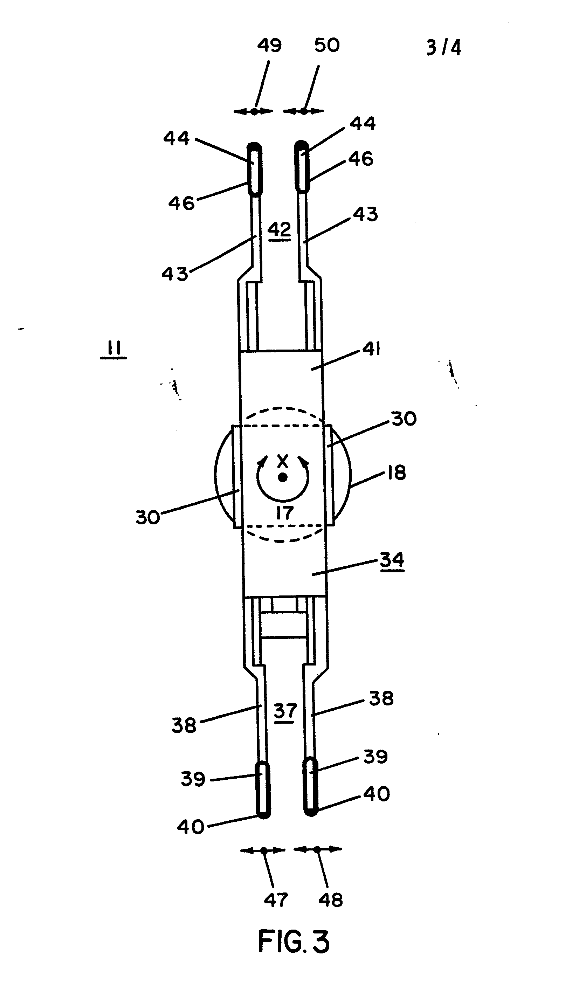

FIG. 3 is an end view of the gripping mechanism 11 shown and described in connection with FIGS. 1 and 2. The two pairs of gripping fingers 37 and 42 are at 180° from each other and are attached to their respective gripping actuating devices of which only gripping actuating device 41 is shown. The gripping mechanism 11 can rotate around the X-axis as illustrated by the bidirectional arrow 17. Each pair of gripping fingers 37 and 42 is capable of being selectively and independently opened and closed as shown by bidirectional arrows 47,48 and 49,50, respectively. Thus, the gripping fingers are independently actuatable in a direction substantially perpendicular to that of the X-axis direction. The opening and closing of the gripping fingers 37 and 42 is respectively controlled by the gripping actuating devices 36 and 41 which in turn are controlled by actuator 19 (not shown).

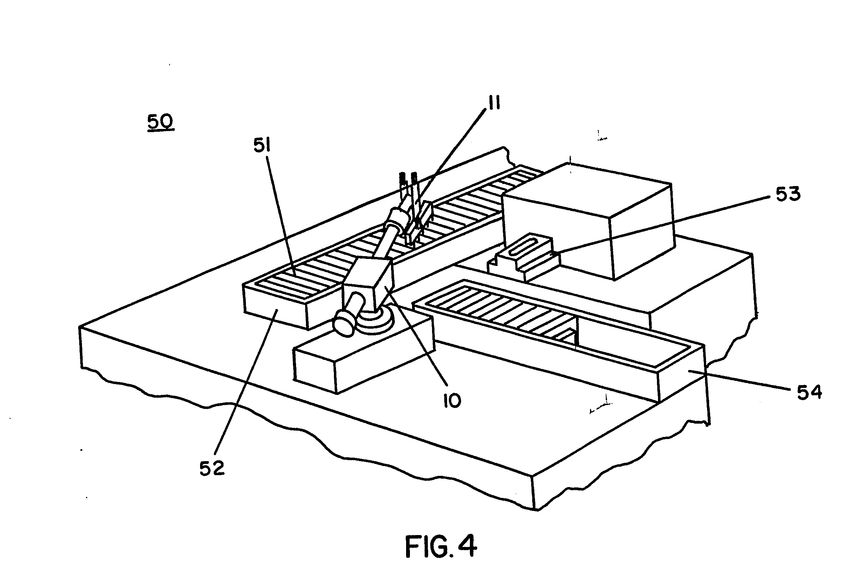

FIG. 4 illustrates a work station 50 with a robotic arm 10 having an improved gripping mechanism 11 in accordance with an embodiment of the invention. For purpose of illustration only, let us assume that an

- 6 -

unprocessed part 51, e.g., a connector block, included in an input tray 52 is first to be processed at a process station 53, and then placed in an output tray 54. When using a robotic arm of the prior art type, the time required to process a part 51 at process station 53 would be wasted since such a known robotic arm is usually dedicated to one part at a time. In accordance with an embodiment of the invention, the improved gripping mechanism 11 attached to the robotic arm 10 allows continuous operation of the arm thereby increasing overall efficiency of the processing cycle. Indeed, due to the dual independently actuatable gripping feature of the mechanism 11, while a first part is being processed at station 53, a second part 51 can be removed from input tray 52 and held by one pair of gripping fingers of the arm. As soon as the first part is processed, the second pair of gripping fingers will pick it up and remove it out of the process station 53. The wrist of the arm 10 will rotate by 180° and the second part held by the one pair of gripping fingers will be loaded into the work station 53. The processed/finished part held by the second pair of gripping fingers can now be unloaded into the output tray 54. Next, the arm 10 is directed to the input tray 52 to hold a new unprocessed part 51 and bring it to the work station 53. As the foregoing operation continues, the input tray 52 becomes empty and the output tray 54 fills up. At some point in time, all the parts 51 are processed and the input tray 52 is empty while the output tray 54 is full and ready to be unloaded out of the work station 50. In a processing environment, an operator would then remove the now full tray 54 and replace it with a full unprocessed parts tray.

## Claims

1. A gripping mechanism for a robotic arm including a wrist portion capable of rotating about a wrist axis,

CHARACTERIZED BY

a plurality of gripping members (37, 42) coupled to the wrist portion (18) of the arm (10) and extending away from the wrist rotation axis (x) and an actuating device (36, 41)

for independently actuating each one of the plurality of gripping numbers.

2. A gripping mechanism in accordance with claim 1

CHARACTERIZED IN THAT

the gripping members (37, 42) are coupled to an extension (30) of the robotic arm (10) and the extension comprises a U-shaped member having a base attached to the wrist portion (18) of the arm and two substantially parallel elongated side portions (30, 30) extending away from the base in a direction substantially parallel to the wrist rotation axis (x).

3. A gripping mechanism in accordance with claim 2,

CHARACTERIZED IN THAT

the plurality of gripping members comprises a first and a second pair of fingers (37, 42) positioned between the two elongated side portions of the arm extension (30) and coupled thereto such that the first pair of fingers (37) is displaced by 180° from the second pair of fingers (42).

4. A gripping mechanism in accordance with any of claim 1 - 3,

CHARACTERIZED IN THAT

each finger comprises:

an elongated coupling portion (38, 43) adapted to be attached at one end thereof to the gripping actuating device (36, 41);

an elongated gripping portion (39, 44) attached to the other end of the elongated coupling portion; and

a plurality of friction means (40, 46) positioned around the elongated gripping portion.

FIG.1

2/4

FIG. 2

0114096

3/4

FIG.3

FIG.4

0114096

European Patent
Office

**EUROPEAN SEARCH REPORT**

| | DOCUMENTS CONSIDERED TO BE RELEVANT | | EP 84300106.6 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| | | | B 25 J 15/00 |
| | <u>EP - A1 - 0 060 896</u> (FUJITSU FANUC) | | |
| X | * Fig. 2-4; page 3, line 17 - page 5, line 15 * | 1 | |
| A | | 2-4 | |
| | -- | | |
| | <u>EP - A1 - 0 086 237</u> (FANUC) (24-08-1983) | | |
| P,X | * Fig. 1,2; page 2, line 34 - page 3, line 25 * | 1 | |
| A | | 2-4 | |
| | -- | | |
| | <u>EP - A1 - 0 062 069</u> (FUJITSU FANUC) | | |
| X | * Fig. 2,3 * | 1 | |
| A | | 2-4 | TECHNICAL FIELDS SEARCHED (Int. Cl. ³) |
| | -- | | |
| | <u>EP - A1 - 0 061 502</u> (FUJITSU FANUC) | | B 25 J 1/00 |
| X | * Fig. 1-4 * | 1 | B 25 J 7/00 |
| A | | 2-4 | B 25 J 9/00 |
| | -- | | F 25 J 15/00 |
| P,A | <u>DE - A1 - 3 147 285</u> (PFAFF INDU-STRIEMASCHINEN) (09-06-1983) | 1-4 | G 21 C 19/00 |
| | * Fig. 1; claim 1 * | | |
| | ---- | | |

The present search report has been drawn up for all claims

| Place of search | Date of completion of the search | Examiner |
|---|---|---|
| VIENNA | 21-03-1984 | DRÖSCHER |